# EUROPEAN PATENT APPLICATION

(11) **EP 1 347 614 A2**
(43) Date of publication of application: **24.09.2003**
(21) Application number: 03005735.0
(22) Date of filing: 13.03.2003
(51) Int. Cl.: H04L 29/06, H04L 12/56, H04L 12/28, H04Q 7/38

(54) **Communication method and system in a cellular network with resource reservation**

(30) Priority: 20.03.2002 JP 2002077445; 30.10.2002 JP 2002315240
(71) Applicant: NEC CORPORATION, Tokyo (JP)
(72) Inventor: Noguchi, Yusuke, Tokyo (JP); Momona, Morihisa, Tokyo (JP)
(74) Representative: Glawe, Delfs, Moll & Partner

(57) **Abstract**

A mobile node receives cell-site transmitted signals and determines their channel quality while establishing a unicast packet session, and transmits a report to the current cell-site if there is at least one neighbor cell-site detected whose channel quality is higher than that of the current cell-site for informing the identifier and channel quality of the detected cell-site, and requesting the resource necessary to support the session. In one embodiment, the current cell-site selects candidate cell-sites based on the report and informs the mobile node of the selected cell-sites. The mobile node selects a new cell-site from the candidate cell-sites and informs the current cell-site of the new cell-site. The requested resource is then reserved in the new cell-site and an IP address and at least one channel identifier are assigned. The mobile node uses the channel identifier to establish a wireless link of the reserved resource to the new cell-site and the IP address to reestablish the session.

## Description

### BACKGROUND OF THE INVENTION

### Field of the Invention

The present invention relates generally to mobile communication systems, and more specifically to a technique for multicast sessions between home domain and visiting mobile nodes.

### Description of the Related Art

Mobile IP protocol developed by the Internet Engineering Task Force (IETF) guarantees reachability for unicast packets ("IP Mobility Support", IETF, C. Perkins. pages 8-11 (Section 1.7) http://www. ietf. org/rfc/rfc 2002.txt.). According the mobile IP (MIP) protocol, a mobile node belongs to a link (or home link of the mobile node) of a management domain (or home domain of the mobile node) and on this home link the mobile node is assigned an address. A mobility management agent is set up on the home link as a home agent of the mobile node. In order to guarantee reachability of unicast packets for a mobile node visiting another link of the home domain or a link of a foreign management domain, the mobile node acquires a temporary address, known as a care-of address, from the visited link and communicates this care-of address to the home agent. If the home agent receives a packet destined for the mobile node, it formulates a packet with the care-of address and encapsulates the received packet in the formulated packet and transmits it to the mobile node, now visiting the foreign domain.

As a means for reducing the time taken to reach the care-of address, study is undertaken by the IETF to develop a technique known as FMIP ("Fast Handovers for Mobile IpvP", Rajeev Koodli, IETF, pages 4-9, http: // www. ietf. org/internet-drafts/draft-ietf-mobileip-fast-mipv6-0.5.txt). According to this technique, a new care-of address which will be used in a new domain is communicated to the current cell-site before a handover at the network-layer is performed. The current cell-site maps the new care-of address to the currently assigned care-of address. When the handover is completed and the old cell-site receives packets from the network, the packets are encapsulated in a packet destined for the new care-of address and forwarded to the mobile node by tunneling through a link between the old cell-site and the new cell-site. The time taken to perform a handover at the network layer (layer-3) is reduced in comparison with a current technique in which request messages are transmitted to the home agent and the correspondent node for communicating the identifier of the new cell-site.

However, no considerations are taken in the FMIP protocol to perform handovers at the wireless link layer (layer-2). This is particularly disadvantageous when a mobile node is in a connection-oriented session. If a handover is performed using the FMIP protocol to establish a new wireless link to a target cell-site, wireless resource must be secured and assigned to the session. However, it takes a long time to secure and assign wireless resource, particularly when more than one session is involved. As a result, the mobile node experiences a serious delay when a handover is performed.

Furthermore, when a handover is attempted, there are often instances where more than one candidate cell-site exists for a possible new cell-site. Since the amount of available resource varies significantly from one cell-site to another, it is desirable from the viewpoint of system's resource utilization efficiency to provide a mechanism that selects a cell-site according to the amount of resources requested by users. However, the FMIP protocol is suitable for applications where there is only one cell-site that can be selected for a new cell-site.

### SUMMARY OF THE INVENTION

Therefore, a primary object of the present invention is to provide a method of communication and a communication system that perform a handover between old and new cell-sites in a short period of time while guaranteeing wireless resource necessary to support a session.

Another object of the present invention is to provide a method of communication and a communication system that select an appropriate cell-site according to resources requested by mobile user.

According to a first aspect of the present invention, there is provided a method of communication for a system in which a plurality of cell-sites are interconnected via a communications network. The method comprises the steps of (a) establishing a unicast packet communication using a network-layer protocol from a mobile node to a distant node via a first wireless link of a current cell-site, (b) reserving wireless resource necessary to support the communication in a target cell-site when the mobile node is preparing a handover from the current cell-site to the target cell-site, (c) assigning an IP address and at least one channel identifier to the mobile node, and (d) establishing a second wireless link of the reserved resource between the mobile node and the target cell-site according to said channel identifier so that said mobile node can use the assigned IP address to reestablish the unicast communication.

According to a second aspect, the present invention provides a communication system comprising a current cell-site connected to a communications network, a mobile node for establishing a unicast packet communication using a network-layer protocol from to a distant node via a first wireless link of the current cell-site, and a target cell-site connected to the communications network for reserving wireless resource necessary to support the communication when the mobile node is preparing a handover from the current cell-site to the target cell-site, and assigning an IP address and at least one channel identifier to the mobile node. The mobile node establishes a second wireless link of the reserved resource to the target cell-site according to the assigned channel identifier and reestablishes the unicast packet communication using the assigned IP address.

### BRIEF DESCRIPTION OF THE DRAWIGNS

The present invention will be described in detail further with reference to the following drawings, in which:
Fig. 1 is a block diagram of a mobile communication system of the present invention;
Fig. 2 is a block diagram of a mobile node of Fig. 1;
Fig. 3 is a block diagram of a cell-site (access router) of Fig. 1;
Fig. 4 is a sequence diagram of the operation of the system according to a first embodiment of the present invention;
Figs. 5A and 5B are sequence diagrams illustrating different modes of resource data acquisition routine of Fig. 4;
Fig. 6 is an illustration of the format of a resource data report message;
Figs. 7A to 7F are flowcharts of the operation of the mobile node according to a number of modified variations of the first embodiment of the invention;
Figs. 8A to 8F are sequence diagrams of the operation of cell-site selection routine according to the modified variations of the first embodiment of the invention;
Fig. 9 is an illustration of the format of a neighbor cell-sites report message transmitted from the mobile node to a current cell-site for indicating a number of cell-sites detected by the mobile node, their channel quality data and resources necessary to support the current sessions of the mobile node;
Fig. 10 is an illustration of the format of a candidate notification message transmitted from the current cell-site to the mobile node for indicating a set of candidate cell-site identifiers and a corresponding set of cell-site channel quality data;
Fig. 11 is an illustration of the format of a resource reservation request message transmitted from the mobile node to the current cell-site for indicating a new cell-side identifier and wireless resources necessary to support the current sessions of the mobile node in the new cell-site;
Fig. 12 is an illustration of the format of a resource release command message transmitted from an old cell-site to a cell-site where reserved resources are not used and released;
Fig. 13 is an illustration of the format of a resource reservation request message transmitted from an old cell-site to a new cell-site for indicating the mobile node identifier and the amount of wireless resources required to support current sessions of the mobile node in the new cell-site;
Fig. 14 is an illustration of the format of a resource reservation response message transmitted from a new cell-site to an old cell-site for indicating a new IP address and a care-of address for forwarding packets from the old cell-site to the new cell-site;
Fig. 15 is an illustration of the format of a cell-site data message transmitted to the mobile node for indicating a new IP address and a set of channel identifiers to be assigned to the current sessions;
Fig. 16 is a sequence diagram of FMIP packet forwarding routine;
Fig. 17 is a block diagram of a resource manager according to a second embodiment of the present invention;
Fig. 18 is a sequence diagram of the operation of the system according to the second embodiment of the present invention;
Figs. 19A and 19B are sequence diagrams illustrating different modes of resource data acquisition routine of Fig. 18;
Fig. 20 is a flowchart of the operation of the mobile node according to the second embodiment of the invention;
Figs. 21A, 21B and 21C are sequence diagrams of the operation of cell-site selection routine according to a number of variations of the second embodiment of the invention;
Fig. 22 is an illustration of the format of a neighbor cell-sites report message transmitted at periodic intervals from the resource manager to the mobile node; and
Fig. 23 is an illustration of the format of a handover command message transmitted from the resource manager to cell-sites.

### DETAILED DESCRIPTION

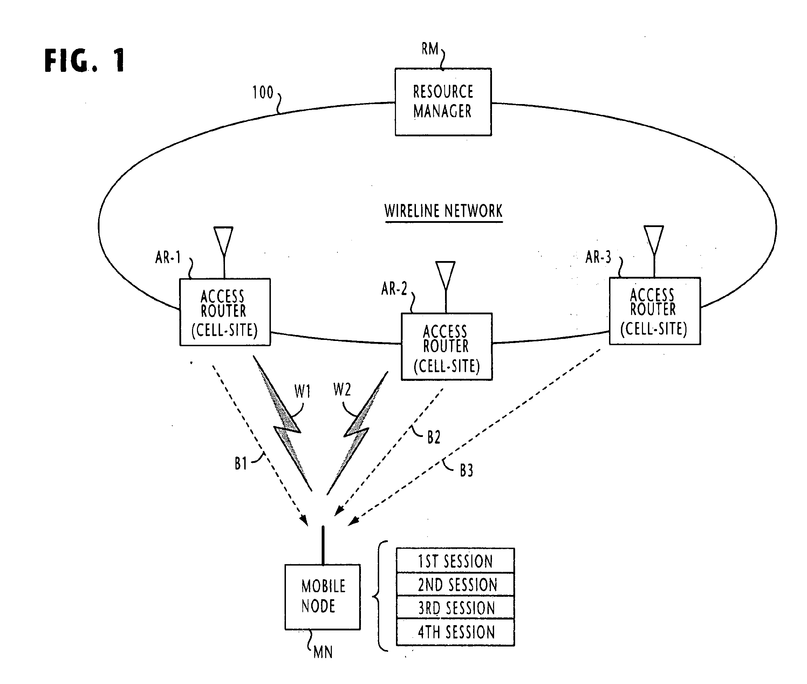

Referring now to Fig. 1, there is shown a mobile communication system of the present invention. The communication network is comprised of a wireline network 100 such as the Internet and a plurality of wireless mobile base stations (simply cell-sites) connected to the network 100 for providing respective coverage over their own service area. The cell-sites are respectively provided with access routers AR-1, AR-2 and AR-3 for establishing a wireless link with a mobile node MN.

In the following description, the cell-sites and wireless access routers will be interchangeably used, and the mobile node MN will be described by assuming that it is establishing four sessions with correspondent communication entities via the access router AR-1 over a wireless link W1 and a handover is initiated for establishing a wireless link W2 with the access router AR-2 to continue its sessions with the remote entities while the mobile node is changing its location. To initiate a handover, the mobile node MN is constantly monitoring a radio beacon B1 transmitted from the current cell-site AR-1 as well as beacons B2 and B3 from neighbor cell-sites AR-2 and AR-3.

According to a first embodiment of the present invention, wireless resources of the network are managed by respective cell-sites in a distributed management mode. However, in a second embodiment of the present invention, a resource manager RM may be connected to the wireline network 100 to perform wireless resource management in a concentrated mode.

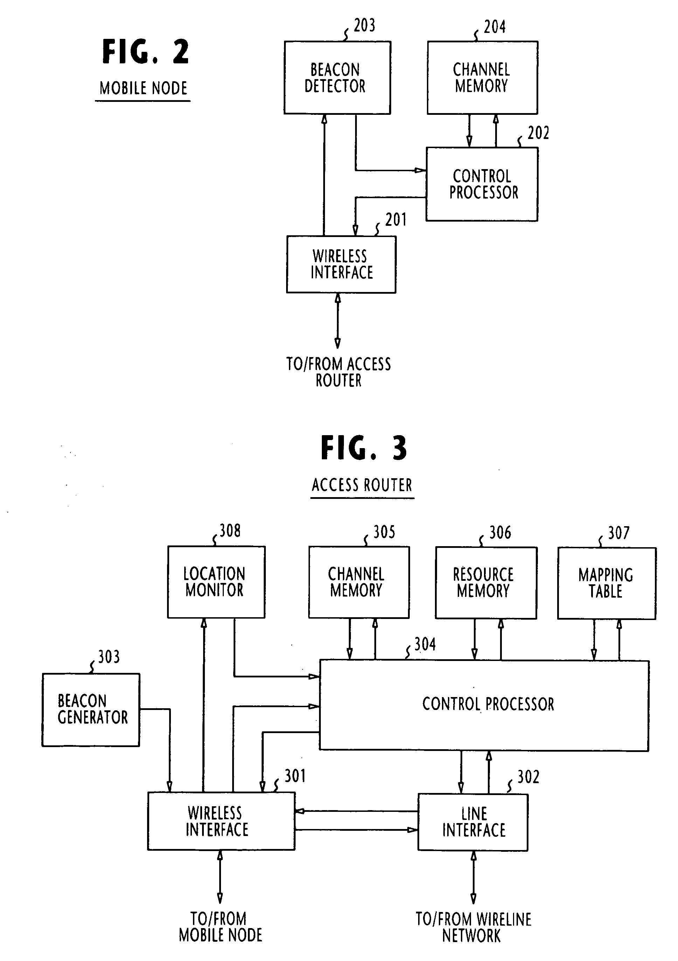

As shown in Fig. 2, the mobile node includes a wireless interface 201 through which a control processor 202 communicates with an access router of the network 100. A channel monitor 203 receives cell-sites' radio beacons via the wireless interface 201, evaluates their signal quality and uses it as an indication of the QoS parameter of the channels respectively assigned to the current sessions to enable the control processor 202 to make comparisons with other beacons. Control processor 202 performs channel management and handover functions and operates with a channel memory 204 for storing channel identifiers assigned to sessions, an IP (Internet Protocol) address and a care-of-address. The care-of address is a temporary address that is assigned to and currently used by the mobile node when it makes a visit to a foreign domain. A user interface such as a keyboard and a visual display unit are additionally provided, but not shown for simplicity.

As shown in Fig. 3, each access router is composed of a wireless interface 301 and a line interface 302, both of which are connected to each other to establish a two-way communication link for routing unicast packets through the wireline network 100 in a connectionless or a connection-oriented mode of communication over a network layer of the Internet. From the wireless interface 301 the cell-site constantly transmits a radio beacon of a pre-assigned frequency generated in a beacon generator 303 for indicating its location and its cell-site identity. A controller processor 304 is associated with both interfaces. Control processor 304 performs channel management, handover, resource management, MIP and FMIP functions. Control processor 304 operates with a channel memory 305 for storing channel identifiers assigned to mobile's sessions and operates with a resource memory 306 for storing wireless resource data of its own cell-site as well as resource data of neighbor cell-sites. A mapping table 307 is further provided for mapping care-of-addresses of an old cell-site to care-of-addresses of a new cell-site. When the control processor 304 performs an FMIP function, the mapping table 307 is used for forwarding incoming packets arriving at the old cell-site from the network to the new cell-site. For this purpose, the control processor 304 establishes a communication path to a neighbor cell-site via the line interface 302. A location monitor 308 is also provided. This location monitor will be used when the resource manager RM takes the responsibility for resource management by collecting mobile-transmitted signals from a set of cell-sites for detecting those cell-sites that surround the current location of the mobile node.

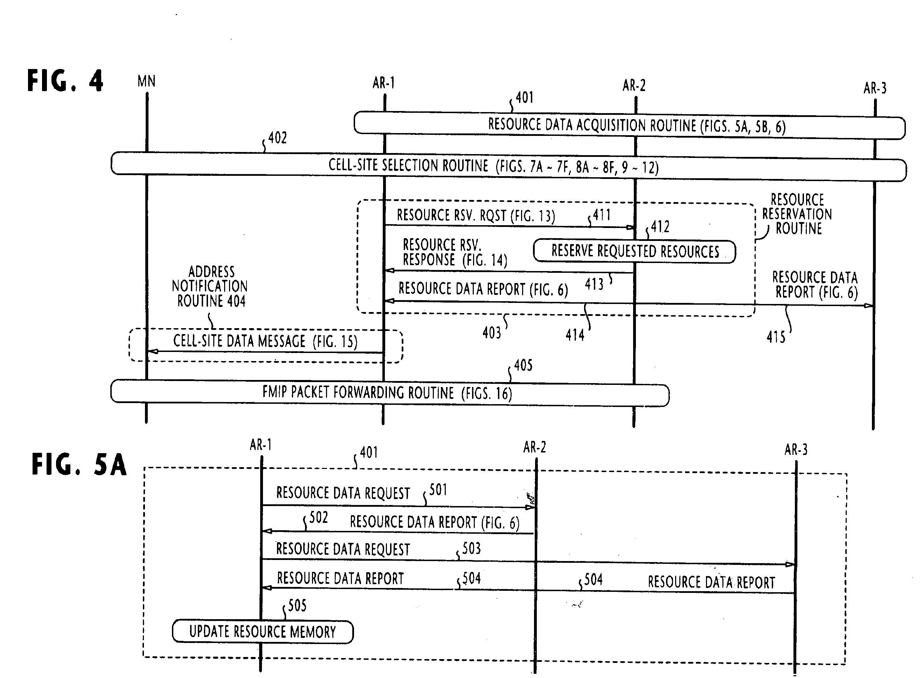

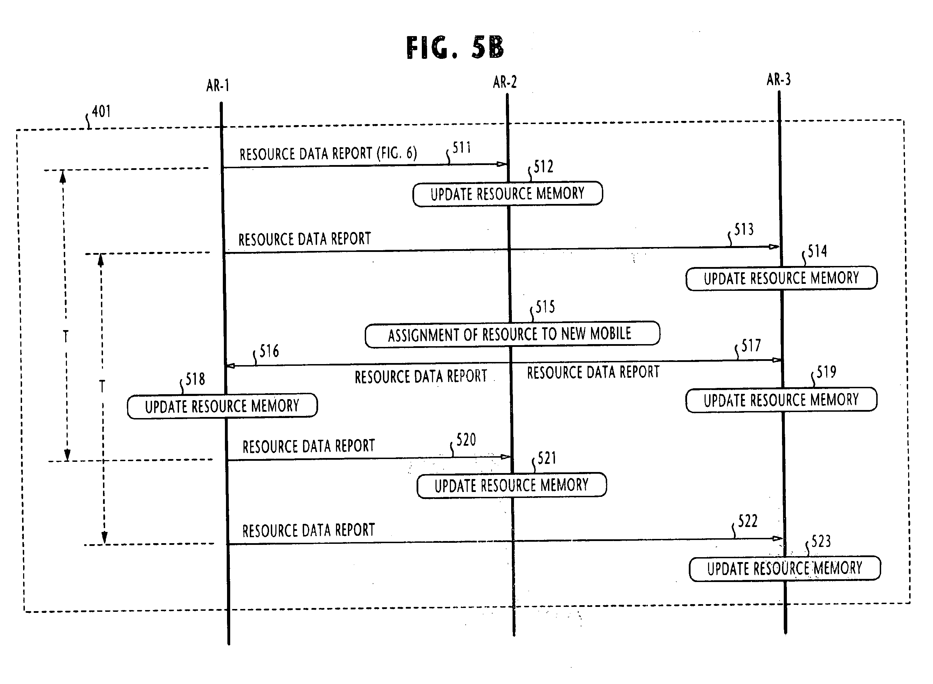

Fig. 4 is a sequence diagram for illustrating the overall operation of the system according to the distributed resource management mode. It is assumed that a handover proceeds for the mobile node MN from cell-site AR-1 to cell-site AR-2. The operation begins with a resource data acquisition routine 401 in which neighbor cell-sites transmit their resource data to the current cell-site. Resource data acquisition routine 401 can be implemented in one of two modes shown respectively in Figs. 5A and 5B.

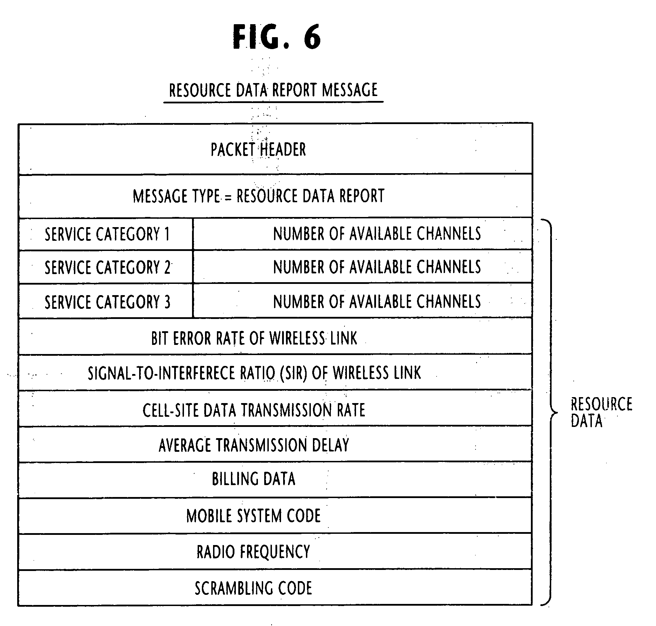

In Fig. 5A, the cell-site AR-1 transmits a resource data request message 501 to the cell-site AR-2, which responds with a resource data report message 502. As shown in Fig. 6, the resource data report message includes a set of fields each indicating the number of available channels for each service category and a list of transmission characteristics such as the bit error rate of the wireless link, the signal-to-interference ratio of the wireless link, the cell-site data transmission rate, the average transmission delay, billing data, the mobile system code, the frequency of the wireless link and the scrambling code. The resource data request message may also be transmitted to the cell-site AR-3 (step 503), which responds with a resource data report message (step 504). Upon receipt of the report messages, the cell-site AR-1 updates its resource memory (step 505).

In Fig. 5B, the cell-site AR-1 transmits a resource data report message to the cell-site AR-2 (step 511). Cell-site AR-2 updates'its resource memory with the currently available wireless resource of the cell-site AR-1. Subsequently, the cell-site AR-1 transmits a resource data report message to the cell-site AR-3 (step 513). Cell-site AR-3 updates its resource memory with the currently available wireless resource of the cell-site AR-1 (step 514). If the cell-site AR-2 assigns wireless resource to a new mobile node at any time (step 515), it advertises its available resource to the cell-sites AR-1 and AR-3 (steps 516, 517). Cell-sites AR-1 and AR-3 update their resource memory with the resource data of cell-site AR-2 (steps 518, 519). Cell-site AR-1 repeats its resource data advertisement at intervals T, so that resource data report messages are sent at different times to cell-sites AR-2 and AR-3 (step 520, 522), resulting in the cell-sites AR-2, AR-3 updating their resource memory (step 521, 523). Note that the periodic transmission timings and their intervals are individually determined for each cell-site.

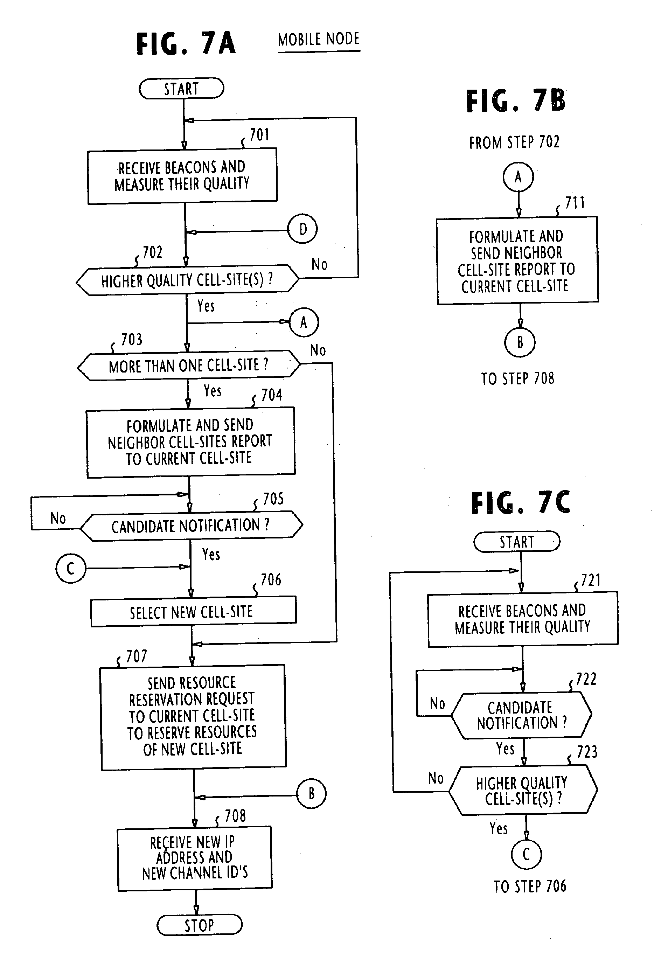

Cell-site selection routine 402 is then performed to select a new cell-site whose detail will be described in detail later with reference to Figs. 7A ∼ 7F, 8A ∼ 8F, 9 ∼ 11.

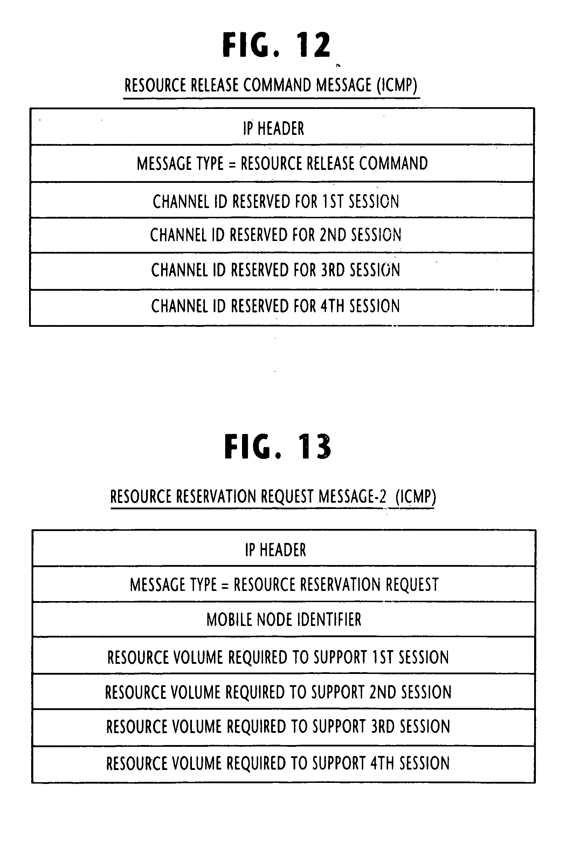

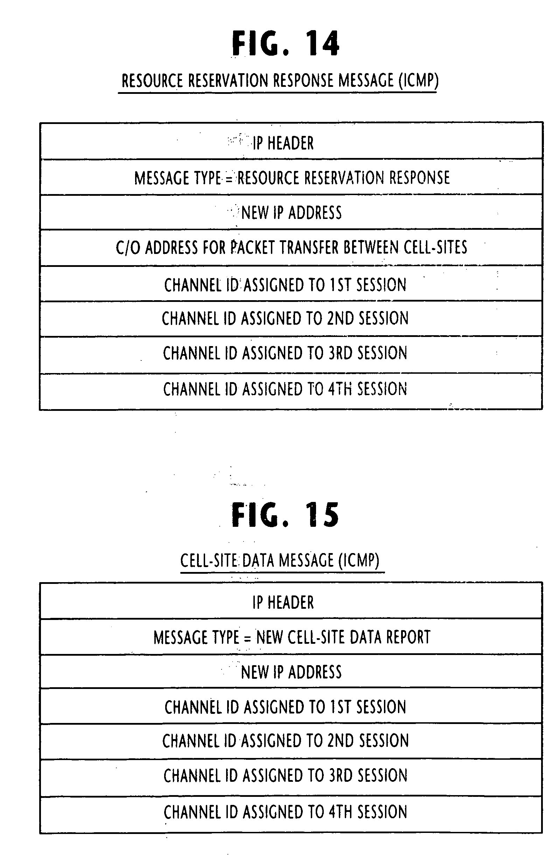

Returning to Fig. 4, wireless resources are reserved in the selected new cell-site for the current sessions following the selection of a new cell-site by cell-site selection routine 402. More specifically, assuming that the cell-site AR-2 is selected as a new cell-site, the current cell-site AR-1 transmits a resource reservation request message to the new cell-site AR-2 (step 411). As shown in Fig. 13, the resource reservation request message is an ICMP (Internet Control Message Protocol) packet containing a mobile node identifier and a set of fields corresponding to current sessions, each indicating the amount of wireless resource required to support the corresponding session. In response, the cell-site AR-2 reserves the requested wireless resources (step 412) and transmits a resource reservation response message (step 413). As shown in Fig. 14, the resource reservation response message contains a new IP address, a care-of address which will be necessary for an old cell-site to forward packets to a new cell-site in an FMIP packet forwarding routine, and a set of fields corresponding to the sessions, each indicating the channel identifier assigned to the corresponding session. Following the transmission of the response message, the cell-site AR-2 transmits a resource data report message to the cell-sites AR-1 and AR-3 to advertise the wireless resource that is available (steps 414, 415).

Resource reservation routine 403 is followed by address notification routine 404 in which a cell-site data message is transmitted from the cell-site AR-1 to the mobile node MN. As illustrated in Fig. 15, the cell-site data message contains a new IP address and a set of channel identifiers to be assigned to the current sessions.

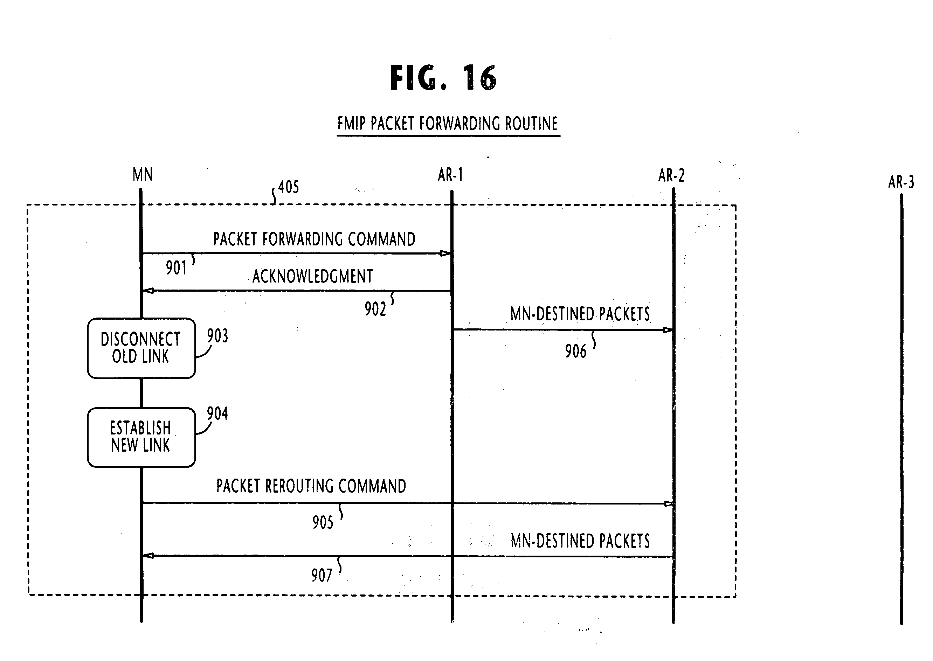

Following address notification routine 404, FMIP packet forwarding routine 405 is performed. Details of FMIP packet forwarding routine 405 will be described later with reference to Figs. 15 and 16.

In cell-site selection routine 402, the control processor 202 of mobile node MN operates in a number of ways respectively shown in Figs. 7A to 7F.

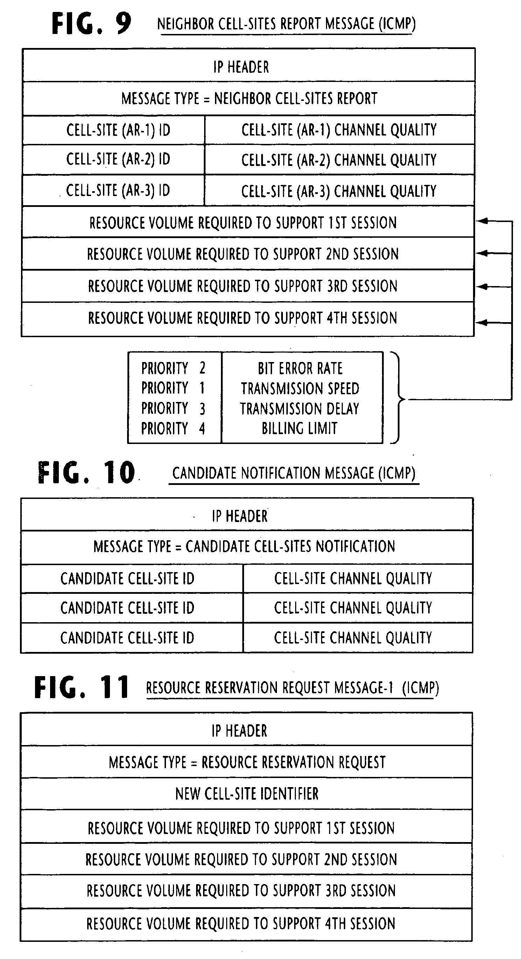

In Fig. 7A, the operation of mobile node starts with step 701 to receive radio beacons from surrounding cell-sites including the current cell-site AR-1 and measure their signal quality. At step 702, the mobile node evaluates the relative values of the measured signal quality and determines whether at least one of the beacons has higher quality than the quality of the current cell-site's beacon. If not, flow returns to step 701 to repeat the beacon measurement process. If the decision is affirmative at step 702, flow proceeds to step 703 to determine if there is more than one cell-site whose beacon has higher quality than the current cell-site's beacon. If there is only one cell-site whose beacon has higher quality than the current cell-site's beacon, flow proceeds from step 703 to step 707. Otherwise, flow proceeds to step 704 to formulate and transmit a neighbor cell-sites report message (Fig. 9) to the current cell-site. In response, the current cell-site selects candidate cell-sites and transmits a candidate notification message (Fig. 10) to the mobile node. When the candidate notification message is received (step 705), the mobile node MN selects one of the cell-sites as a new cell-site (step 706).

At step 707, the mobile node transmits a resource reservation request message (Fig. 11) to the current cell-site to reserve wireless resources of the new cell-site for the current sessions. At step 708, the mobile node MN receives a cell-site data message containing a new IP address and a set of new channel identifiers (Fig. 15).

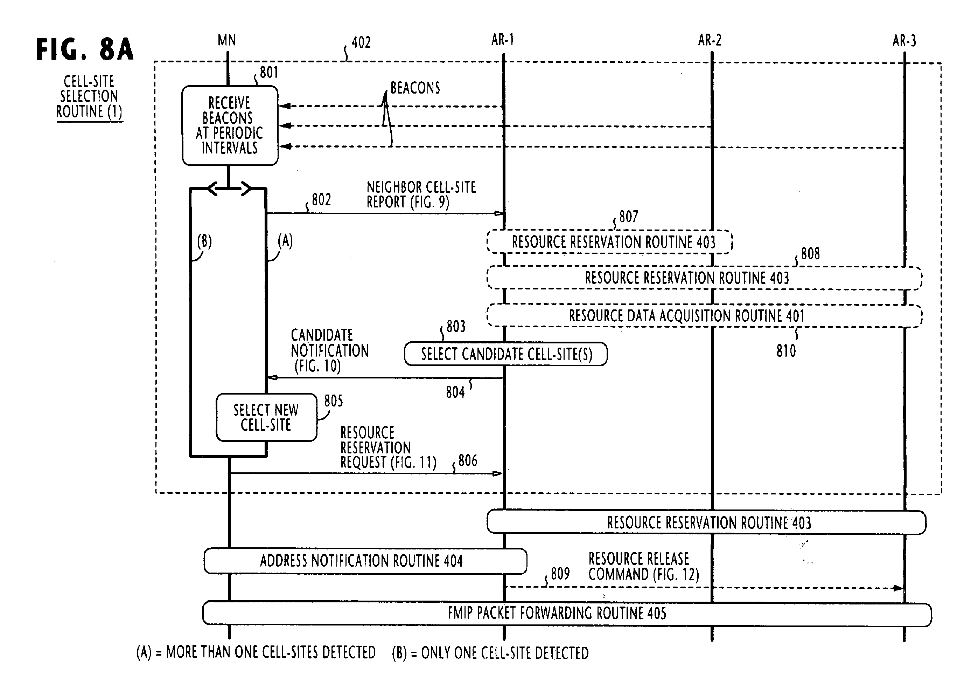

When the mobile node operates according to Fig. 7A, a sequence of events occurs as shown in Fig. 8A. Beacons from the cell-sites AR-1, AR-2, AR-3 are received and their quality are measured at periodic intervals by repeating steps 701 and 702. This is illustrated in Fig. 8A as step 801. When the mobile node determines that there is at least one neighbor cell-site whose beacon has higher signal quality than the current cell-site transmitted beacon, the decision at step 702 is affirmative. If the number of such neighbor cell-sites is greater than one, the decision at step 703 is affirmative and the mobile node transmits a neighbor cell-sites report message 802 to the current cell-site AR-1.

As illustrated in Fig. 9, the neighbor cell-sites report message contains channel quality indication for each of the detected neighbor cell-sites and a set of resource volumes respectively required to support the current sessions. Each resource volume is represented by bit error rate, transmission speed, transmission delay and billing limit with different levels of priority.

Cell-site AR-2 responds to this report message by selecting candidate cell-sites from the reported cell-sites (step 803) by using resource data obtained by the resource data acquisition routine and transmitting a candidate notification message 804 to the mobile node. As shown in Fig. 10, the candidate notification message includes a list of candidate cell-site identifiers and their channel quality.

Upon receipt of the candidate notification (step 705), the mobile node proceeds to step 706 and select one of the candidate cell-sites as a new cell-site (as shown at 805) and proceeds to step 707.

On the other hand, if there is only one neighbor cell-site whose beacon has higher quality than the current cell-site transmitted beacon, the mobile node makes a negative decision at step 703 and proceeds to step 707.

At step 707, the mobile node a resource reservation request message 806 to the current cell-site AR-1. As shown in Fig. 11, the resource reservation request message contains a new cell-site identifier and a set of wireless resource volumes respectively required to support the current sessions.

In a modified embodiment, resource reservation routine 403 may be initiated in the current cell-site AR-1 following the receipt of a neighbor cell-sites report message from the mobile node (Fig. 9). As indicated by steps 807 and 808, the cell-site AR-1 transmits resource reservation request to the cell-sites AR-2 and AR-3, and the cell-sites AR-2 and AR-3 reply with resource data report messages (see Fig. 4).

In this modified embodiment, since resource reservation routine 403 is performed before a new cell-site is selected (step 805), the mobile node transmits the identifier of the selected cell-site to the current cell-site, instead of the resource reservation request 806. In response to the cell-site identifier, the current cell-site requests the new (target) cell-site to establish a wireless link to the mobile node. Simultaneously, the current cell-site sends a cell-site data message (Fig. 15) to the mobile node to urge it to establish a link to the target cell-site.

Following the cell-site selection routine 402, resource reservation routine 403 is performed if steps 807 and 808 are not performed. Address notification routine 404 is then performed. If resource reservation routine 403 is performed by steps 807 and 808, a resource release command message 809 is transmitted from the cell-site AR-1 to the cell-site which is not selected as a new cell-site, i.e., AR-3 to release its reserved resource. As shown in Fig. 12, the resource release command message contains a list of channel identifiers reserved for the sessions.

In a further modification of Fig. 8A, resource data acquisition routine 401 may be initiated in the current cell-site AR-1 following the receipt of a neighbor cell-sites report message from the mobile node, as indicated by step 810 to receive resource data from the cell-sites AR-2 and AR-3. Cell-site AR-1 uses the informed resource data to select candidate cell-sites.

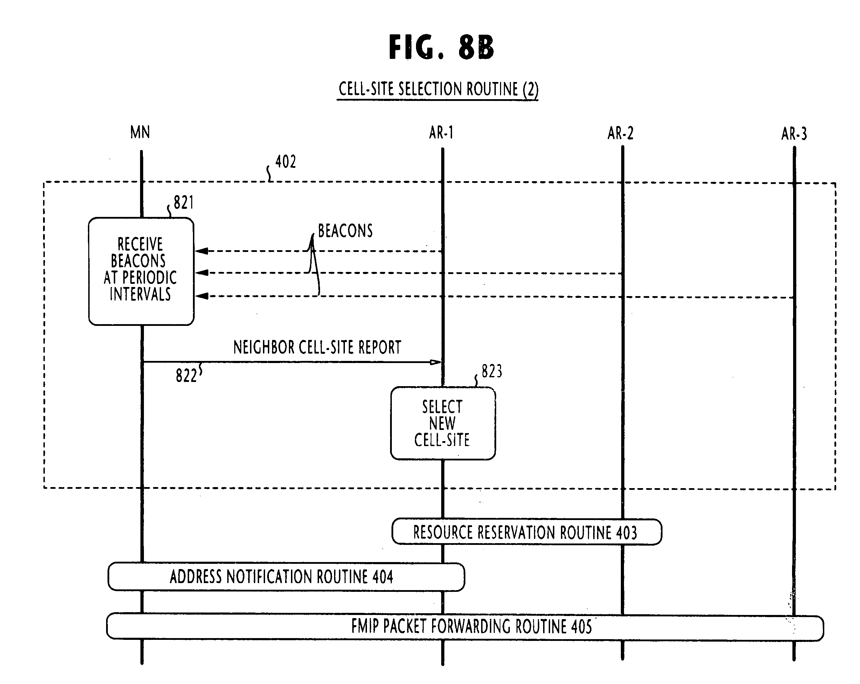

Fig. 7B is a modification of the flowchart of Fig. 7A. In this modified embodiment, the current cell-site takes the responsibility for the selection of a new cell-site. Hence, the functions of the mobile node are reduced to the formulation and transmission of a neighbor cell-sites report message to the current cell-site at step 711 and proceeds to step 708. In this modification, cell-site selection routine 402 proceeds as shown in Fig. 8B. Mobile node MN receive beacons from cell-sites AR-1, AR-2, AR-3 at periodic intervals and measures their quality until the quality of at least one beacon becomes higher than the quality of the current cell-site's beacon (step 821) by repeating steps 701 and 702 (Fig. 7A). When such a cell-site is detected, the decision at step 702 is affirmative, the mobile node executes step 711 by sending a neighbor cell-sites report message to the current cell-site AR-1 and proceeds to step 708. In response to this neighbor cell-sites report, the cell-site AR-1 selects one of the cell-sites contained in this report as a new cell-site and initiates resource reservation routine 403 to reserve resources in the selected cell-site AR-2.

Since the cell-site is capable of determining the location of a mobile node, it is also capable of determining neighbor cell-sites that can be selected as candidate cell-sites for a handover of the mobile node. Therefore, candidate notification message may be formulated and transmitted periodically from the current cell-site to the mobile node.

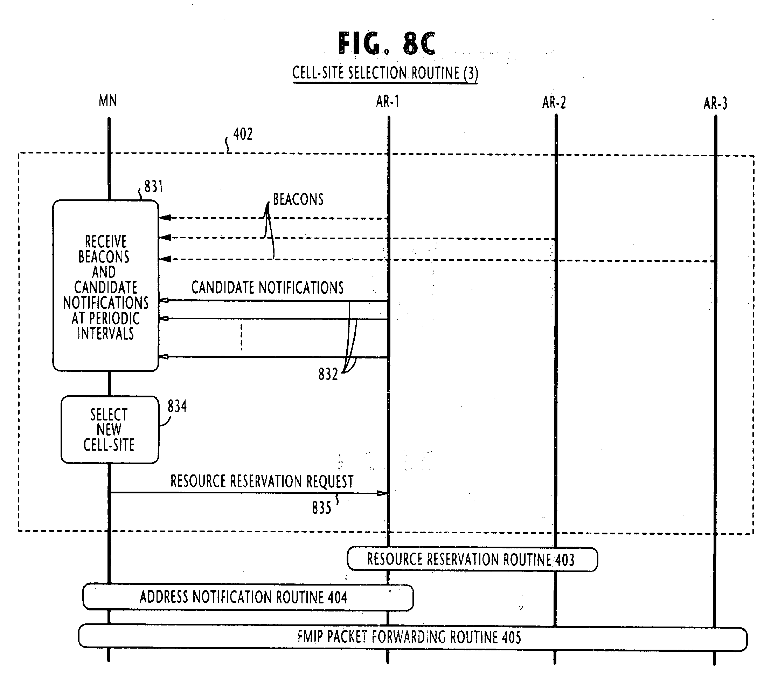

In this modification shown in Fig. 7C, the mobile node repeatedly receives beacons from cell-sites AR-1, AR-2, AR-3 at step 721 and repeatedly receives candidate notification messages at step 722 until the quality of at least one beacon becomes higher than the quality of the current cell-site's beacon at step 723. When such a cell-site is detected, flow proceeds from step 723 to step 706 (Fig. 7A) to select a new cell-site from the cell-sites listed in a candidate notification message most recently received from the current cell-site. As shown in Fig. 8C, the mobile node repeats this process (step 831) to receive beacons and candidate notification messages 832. When the decision at step 723 is affirmative, the mobile node selects a new cell-site from the list of candidate cell-sites contained in the last-received notification message 832 (step 834) and transmits a resource reservation request message 835 at step 707.

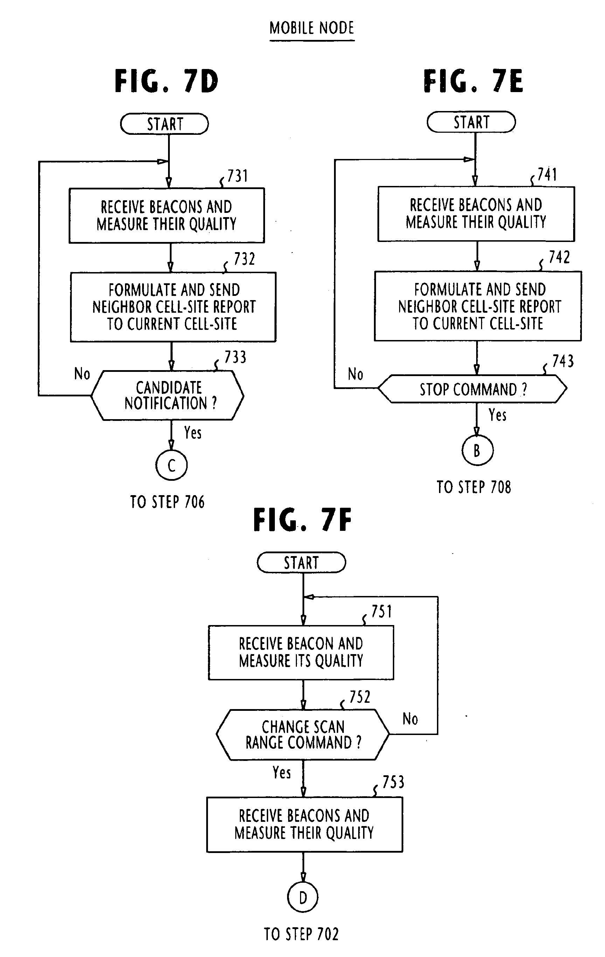

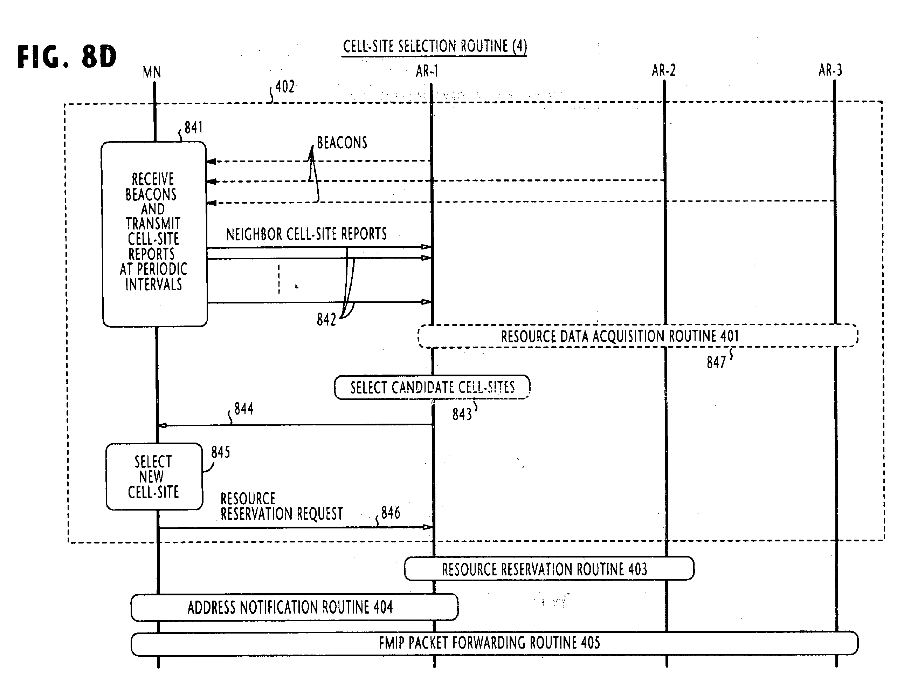

In a further modification of cell-site selection routine 401, the mobile node formulates and communicates neighbor cell-sites report to the current cell-site at periodic intervals while monitoring beacons in order to allow the current cell-site to select candidate cell-sites and inform the mobile node of the candidate cell-sites. In this modification (Fig. 7D), the mobile node repeatedly receives beacons from cell-sites AR-1, AR-2, AR-3 at step 731 and formulates and transmits a neighbor cell-sites report message at step 732 until it receives a candidate notification message at step 733. When the mobile node receives a candidate notification message at step 733, flow proceeds to step 706 to select a new cell-site from the list of cell-sites contained in the received notification message. In Fig. 8D, the mobile node repeats the beacon detection and cell-site reporting process (step 841) by receiving beacons and transmitting a neighbor cell-sites report messages 842.

In response to each of the neighbor cell-sites report messages, the current cell-site AR-1 compares the quality of each beacon with the quality of other beacons to determine whether there is at least one cell-site whose beacon has higher quality than the current cell-site transmitted beacon. If such a cell-site is detected, the current cell-site selects candidate cell-sites from a neighbor cell-sites report most recently received from the mobile node (step 843) and transmits a candidate notification message 844 to the mobile node. In response to this message, the mobile node selects a new cell-site from the list of candidate cell-sites contained in the received notification message 844 (step 845) and transmits a resource reservation request message 846 at step 707. In this modification, resource data acquisition routine 401 may be initiated in the current cell-site AR-1 to collect resource data from other cell-sites when it has determined that there is at least one cell-site whose beacon has higher quality than the current cell-site transmitted beacon (step 847).

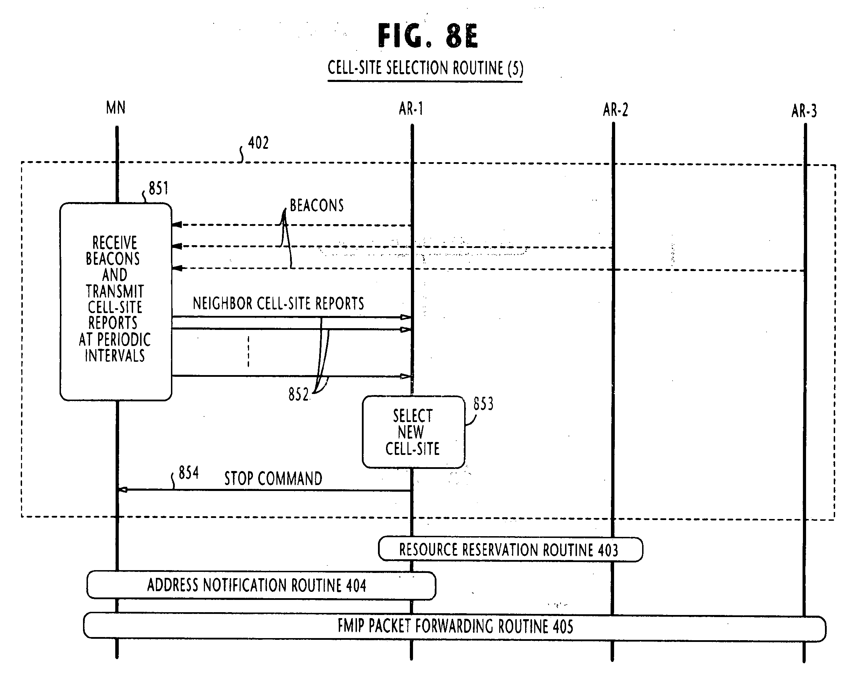

In a manner similar to Figs. 7D and 8D, cell-site selection routine 402 is further modified as shown in Figs. 7E and 8E. In Fig. 7E, the mobile node repeatedly receives beacons from cell-sites AR-1, AR-2, AR-3 at step 741 and repeatedly formulates and transmits a neighbor cell-sites report message at step 742 until it receives a stop command from the current cell-site at step 743. When the mobile node receives a stop command candidate notification message at step 743, flow proceeds to step 708 to receive a cell-site data message (Fig. 15) which indicates a new IP address and a set of new channel identifiers. In Fig. 8E, the mobile node repeats the beacon detection and cell-site reporting process (step 851) by receiving beacons and transmitting a neighbor cell-sites report messages 852. In response to each of the neighbor cell-sites report messages 852, the current cell-site AR-1 compares the quality of each beacon with the quality of other beacons to determine whether there is at least one cell-site whose beacon has higher quality than the current cell-site transmitted beacon. If such a cell-site is detected, the current cell-site selects a new cell-site from a neighbor cell-sites report most recently received from the mobile node (step 853) and transmits a stop command 854 to the mobile node. In response to the stop command message, the mobile node proceeds to step 708 to wait for a cell-site data message.

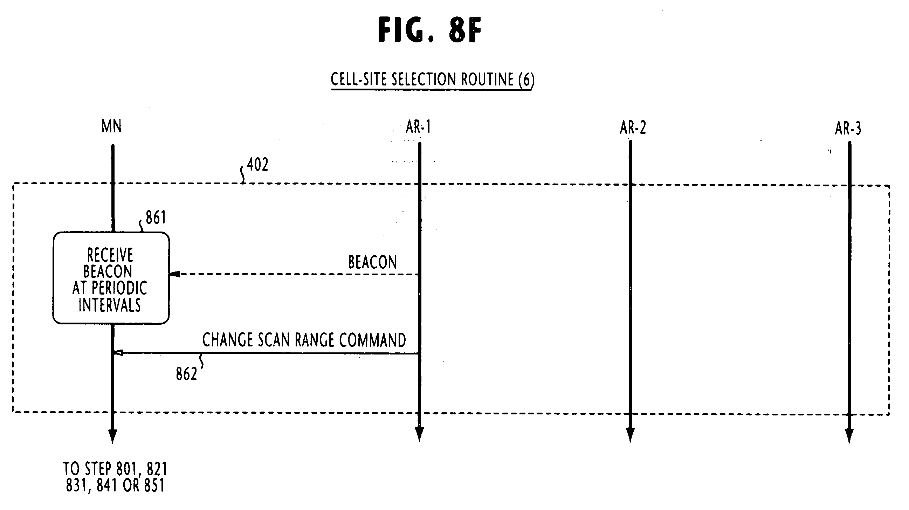

If the mobile node constantly performs a cell search by scanning across the spectrum of beacon frequencies for possible cell-sites which may be located out of its detection range, the search would result in a wastage of useful power and time. In order to avoid this problem, the mobile node is initially set to a narrow scan range so that it exclusively receives the beacon of the current cell-site. Location monitor 308 of the current cell-site constantly monitors the mobile position by sensing the arrival direction of the mobile-transmitted signal. When the current cell-site determines that the mobile node has moved away from the current cell-site and nears a neighbor cell-site, it transmits a change scan range command to the mobile node to increase its range of beacon frequencies or scrambling codes so that the mobile node is able to receive beacons from neighbor cell-sites in addition to the current cell-site beacon. In a still further modification of cell-site selection routine 401, the scan range of the mobile node is altered as shown in Figs. 7F and 8F. In Fig. 7F, the mobile node is initially set in a narrow range to exclusively receive the beacon of the current cell-site and measure its quality and continues receiving this beacon (as indicated by steps 751, 861) until a change scan range command 862 arrives from the current cell-site AR-1 (step 752). In response to this command message, the mobile node proceeds to step 753 to expand its scan range to receive beacons from all cell-sites AR-1, AR-2, AR-3, and then advances to step 702 to check to see if there is at least one cell-site whose beacon has higher quality than the current cell-site beacon (Fig. 7A). After expanding the scan range, the mobile node performs step 801, 821, 831 or 841.

Fig. 16 shows details of FMIP packet forwarding routine 405. This routine begins with the mobile node transmitting a packet forwarding command message 901 to the cell-site AR-1 when it receives a cell-site data message (see Fig. 15) during address notification routine 404. When the mobile node receives an acknowledgment message 902 from cell-site AR-1, it disconnects the old wireless link with the cell-site AR-1 (step 903), establishes a new wireless link with the cell-site AR-2 (step 904) and transmits a packet rerouting command message 905 to the new cell-site AR-2. Old cell-site AR-1 may receive mobile-destined packets from the network 100 after it has transmitted the acknowledgment message. When this occurs, the cell-site AR-1 forwards the received packets 906 to the new cell-site AR-2 via a switched or dedicated communication link. The forwarded packets are stored in a buffer in the new cell-site AR-2 and then transmitted to the mobile node in response to the packet rerouting command message 905.

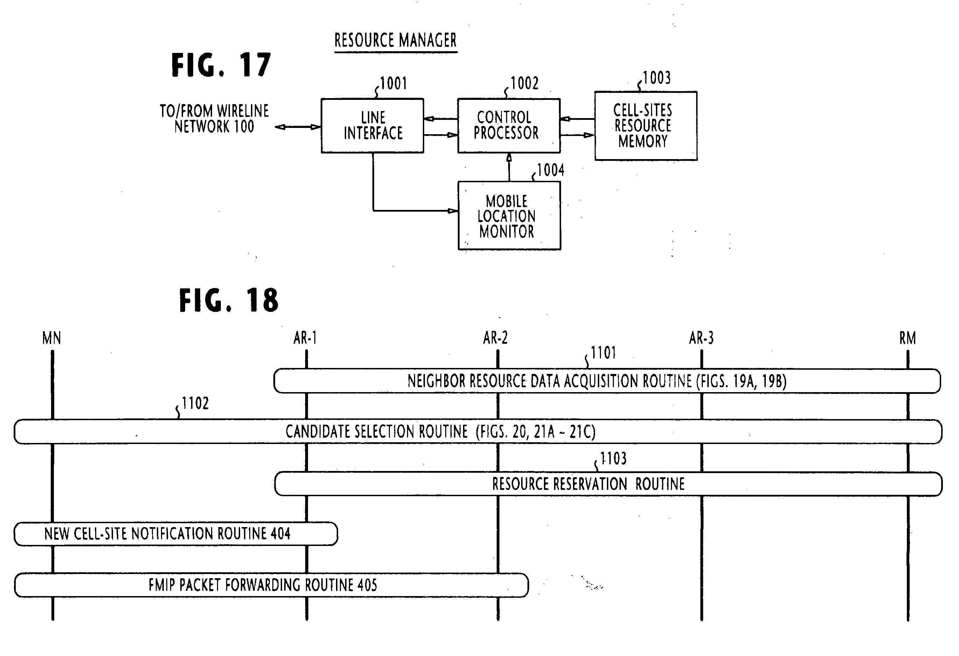

In a second embodiment of the present invention, the resource manager RM performs resource management in a concentrated mode. As shown in Fig. 17, the resource manager RM is comprised of a line interface 1001 connected to the wireline network 100, a control processor 1002, a cell-sites resource memory 1003 and a mobile location monitor 1004.

Fig. 18 is a sequence diagram for illustrating the overall operation of the system according to the concentrated resource management mode. The operation begins with a resource data acquisition routine 1101 in which the resource manager RM collects resource data from the cell-sites AR-1, AR-2 and AR-3. Resource data acquisition routine 1101 is followed by cell-site selection routine 1102. In subsequent resource reservation routine 1103, the old cell-site requests the new cell-site to reserve the necessary resources for the sessions and the new cell-site informs the resource manager RM of the reserved resources to update its resource memory. Resource reservation routine 1103 is then successively followed by cell-site notification routine 404 and FMIP packet forwarding routine 405.

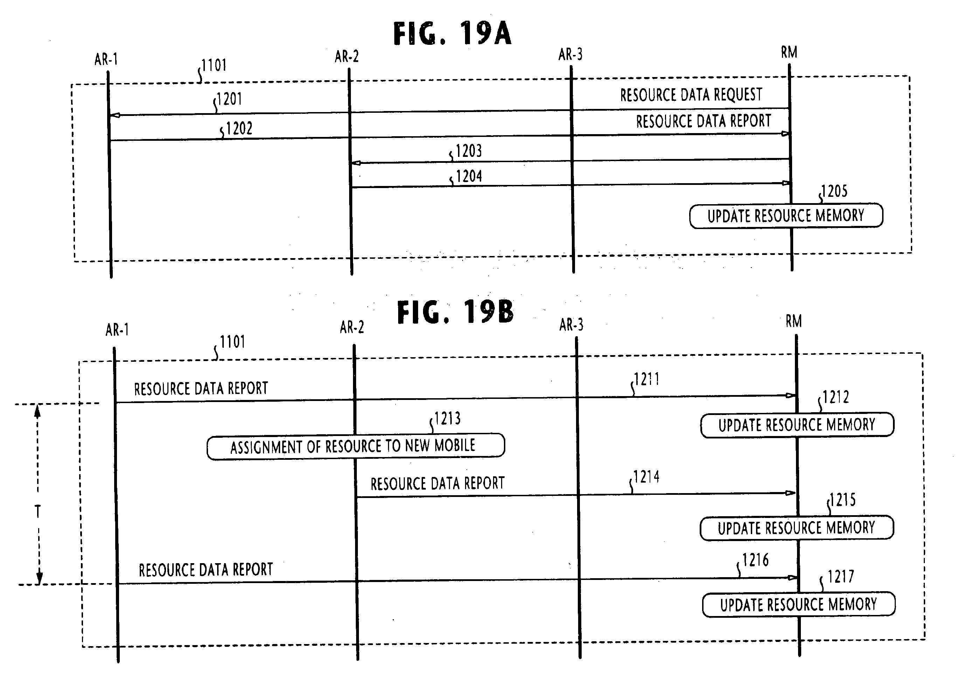

More specifically, resource data acquisition routine 1101 is implemented in one of two modes as will be described below. shown respectively in Figs. 19A and 19B. In Fig. 19A, the resource manager RM transmits resource data request messages 1201 and 1203 to cell-sites AR-1 and AR-2, which respond with resource data report messages 1202 and 1204 (see Fig. 6), respectively. Upon receipt of the report messages, the resource manager RM updates its resource memory (step 1205). In Fig. 19B, the cell-site AR-1 transmits a resource data report message 1211 to the resource manager RM at intervals T. In response, the resource manager updates its resource memory with the resource data contained in the report message (step 1212). If the cell-site AR-2 assigns resource to a new mobile node (step 1213), it sends a resource data report 1214 to the resource manager, which responds by updating its resource memory (step 1215). Subsequently, the cell-site AR-1 transmits a resource data report message 1216 to the resource manager to update its resource memory (step 1217). Although not shown, the cell-site AR-2 also transmits its resource data report at periodic intervals to the resource manager. In like manner, the cell-site AR-3 also transmits its resource data report message to the resource manager at predetermined intervals.

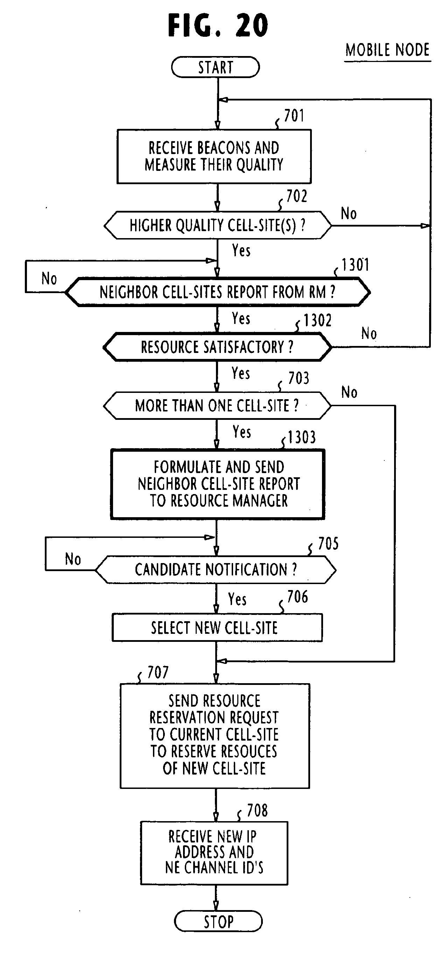

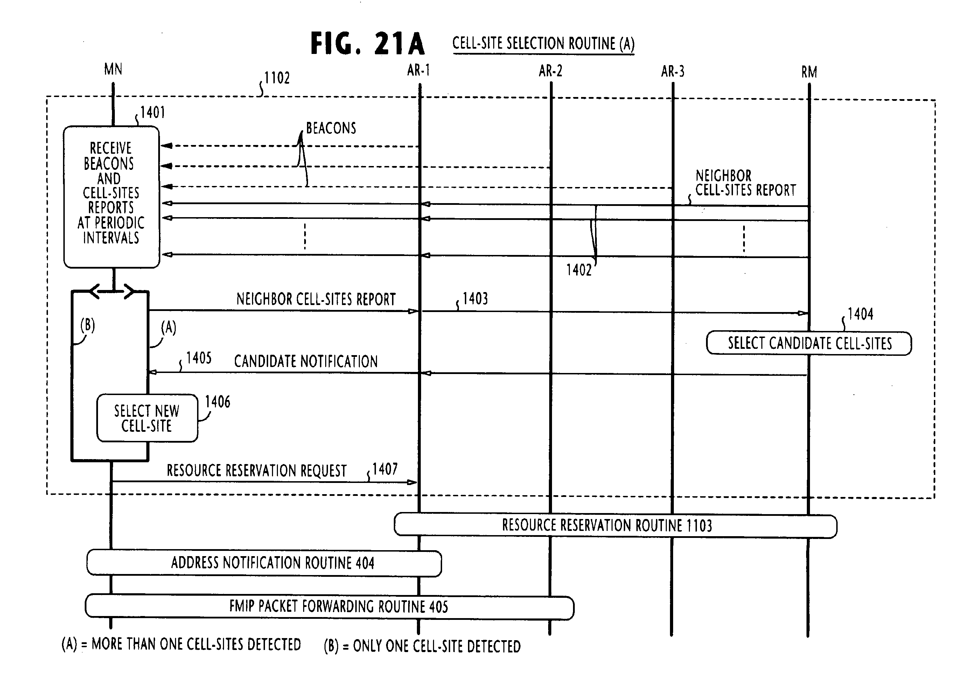

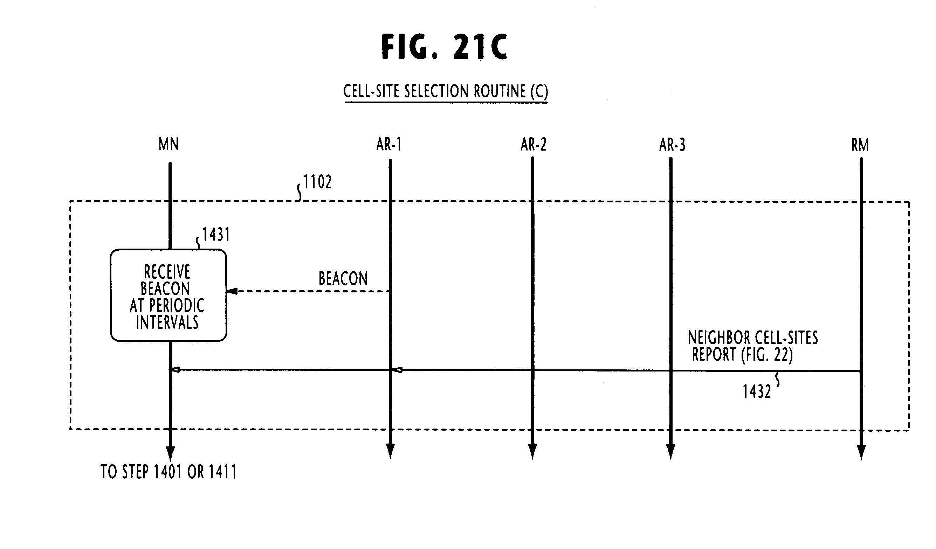

Cell-site selection routine 1102 is implemented in one of a plurality of modes as shown Figs. 20, 21A through 21C. Resource manager RM establishes a link through the network 100 to the mobile node and periodically transmits a neighbor cell-sites report to the mobile node. Mobile node MN operates according to the flowchart of Fig. 20 which differs from the flowchart of Fig. 7A by the inclusion of steps 1301, 1302 and 1303.

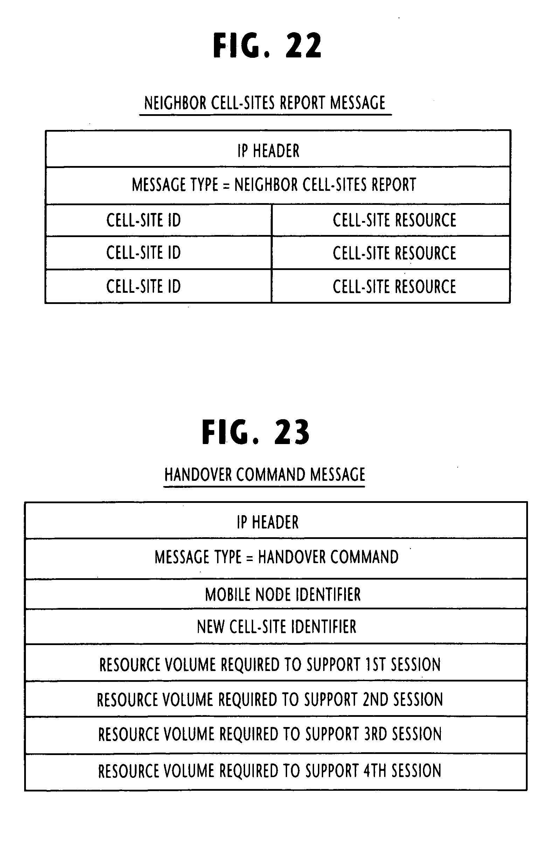

When there is at least one cell-site whose beacon has higher quality than the current cell-site transmitted beacon, the decision at step 702 is affirmative and the mobile node proceeds to step 1301 to check to see if there is a neighbor cell-site report message. Resource manager RM formulates a neighbor cell-sites report message based on the location data of the mobile node and the resource data of neighbor cell-sites stored in its resource memory and transmits it at periodic intervals. As shown in Fig. 22, the neighbor cell-sites report message of the resource manager contains a set of cell-site identifiers and a corresponding set of cell-site resources.

If the decision is negative at step 1301, the mobile node returns to step 701 to repeat the beacon detection and report reception process. If the mobile node receives a neighbor cell-sites report from the resource manager RM, flow proceeds to step 1302 to determine whether the cell-sites detected at step 702 satisfy the amount of resources required to support its sessions. If not, flow returns to step 701. Otherwise, the mobile node proceeds to step 703 to determine whether there is more than one cell-site whose wireless resource is satisfactory for the current sessions. If there is only one such cell-site, the mobile node transmits a resource reservation request message to the current cell-site (step 707). If there is more than one such cell-site, flow proceeds from step 703 to step 1303 to transmit a neighbor cell-sites report message to the resource manager RM via the current cell-site AR-1.

In Fig. 21A, the mobile node receives, at step 1401, beacons from the cell-sites AR-1 ∼ AR-3 and neighbor cell-sites report messages 1402 from the resource manager RM at periodic intervals until it determines that there is at least one cell-site whose beacon quality is higher than the beacon quality of the current cell-site and whose wireless resource is satisfactory for the current sessions. If more than one such cell-site is detected (step 703), the mobile node transmits a neighbor cell-sites report message 1403 to the resource manager RM. The resource manager responds to this report message 1403 by selecting candidate cell-sites (step 1404) and transmits a candidate notification message 1405 to the mobile node. The mobile node responds to this notification by selecting a new cell-site (step 1406) and transmits a resource reservation request message 1407 to the current cell-site AR-1. If there is only one cell-site detected at step 703, the mobile node selects it as a new cell-site and proceeds to step 707 to transmit a reservation request message 1407 to the current cell-site AR-1.

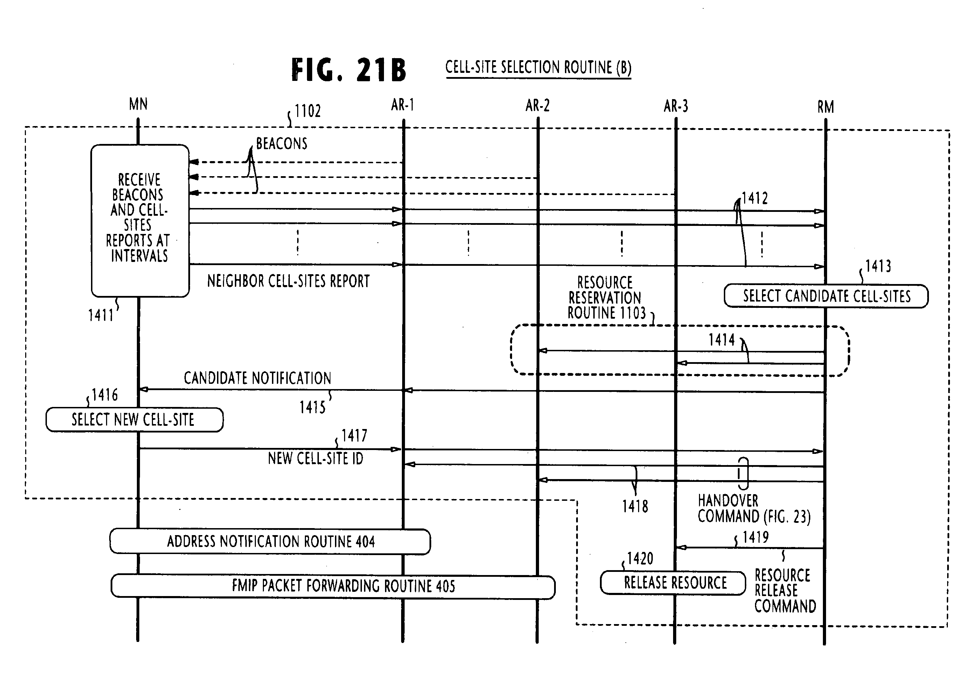

A modification of Fig. 21A is shown in Fig. 21B in which the mobile node MN formulates a neighbor cell-sites report based on the measured quality of the received beacons and transmits it in a message 1412 at periodic intervals to the resource manager RM. In this embodiment, the resource manager uses the received message to determine whether there is at least one cell-site whose beacon quality is higher than that of the beacon of the current cell-site. When this decision is made, the resource manager selects candidate cell-sites (step 1413). Following this decision, the resource manager initiates resource reservation routine 1103 by sending a resource reservation request 1414 to cell-sites AR-2 and AR-3 to reserve the resources necessary to support the current sessions of the mobile node and receiving messages from the cell-sites AR-2 and AR-3 indicating their remaining resources. Resource manager RM updates its resource memory according to the resources remaining in the cell-sites-AR-2 and AR-3. Then, the resource manager transmits a candidate notification message 1415 to the mobile node to indicate the selected candidate cell-sites. In response, the mobile node selects one of the candidate cell-sites as a new cell-site (step 1416) and transmits a message 1417 to the resource manager for indicating the identifier of the new cell-site AR-2. Resource manage RM responds to the message 1417 by transmitting a handover command message 1418 to the old cell-site AR-1 and the new cell-site AR-2. As shown in Fig. 23, the handover command message contains the mobile node identifier, the new cell-site identifier and a set of resource volumes required to support the current sessions. Following the transmission of the handover command message, the resource manager sends a resource release command message to the cell-site AR-3 to release its reserved resource (step 1420). Since resource reservation routine 1103 has been completed before the mobile node selects the new cell-site, cell-site selection routine 1102 of Fig. 21B is followed by address notification routine 404.

In a manner similar to Fig. 8F, the beacon transmission of the mobile node is initially set to a narrow range. Resource manager RM constantly monitors the location of the mobile node and determines whether it is necessary for the mobile node to expand its scan range. When the resource manager determines that it is necessary for the mobile node to expand its scan range, it formulates and transmits a neighbor cell-sites report message 1432 (see Fig. 22) to the mobile node. In response to this report message, the mobile node expands its scan range to receive beacons from the cell-sites AR-2 and AR-3 in addition to the beacon from the current cell-site.

## Claims

1. A method of communication for a system in which a plurality of cell-sites are interconnected via a communications network, comprising the steps of:
a) establishing a unicast packet communication using a network-layer protocol from a mobile node to a distant node via a first wireless link of a current cell-site;
b) reserving wireless resource necessary to support the communication in a target cell-site when said mobile node is preparing a handover from said current cell-site to said target cell-site;
c) assigning an IP address and at least one channel identifier to said mobile node; and
d) establishing a second wireless link of the reserved resource between said mobile node and said target cell-site according to said channel identifier so that said mobile node can use the assigned IP address to reestablish said unicast communication.

2. The method of claim 1, wherein the step (b) comprises the steps of:
A) receiving a plurality of cell-site transmitted signals at said mobile node and determining channel quality of the signals (801);
B) transmitting a report message (802) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
C) selecting (802), at said current cell-site, a plurality of candidate cell-sites based on contents of said report message (802);
D) transmitting a notification message from the current cell-site to said mobile node for notifying the selected candidate cell-sites (804);
E) selecting, at said mobile node, a new cell-site as said target cell-site from the notified candidate cell-sites (805); and
F) transmitting a reservation request message (806) from said mobile node to said current cell-site for reserving said wireless resource.

3. The method of claim 1, wherein the step (b) comprises the steps of:
A) receiving a plurality of cell-site transmitted signals at said mobile node and determining channel quality of the signals (801);
B) transmitting a report message from said mobile node to said current cell-site if said target cell-site is only one neighbor cell-site whose channel quality is higher than channel quality of said current cell-site, said report message including an identifier of said target cell-site, the channel quality of said target cell-site, and wireless resource necessary to support a session of said mobile node (802); and
C) transmitting a reservation request message (806) from said mobile node to said current cell-site for reserving said wireless resource of said target cell-site.

4. The method of claim 1, wherein the step (b) comprises the steps of:
A) receiving a plurality of cell-site transmitted signals at said mobile node and determining channel quality of the signals (801);
B) transmitting a report message (802) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
C) transmitting a reservation request message (807, 808) from said current cell-site to neighbor cell-sites for reserving said wireless resource;
D) selecting (803), at said current cell-site, a plurality of candidate cell-sites based on contents of said report message (802);
E) transmitting a notification message from the current cell-site to said mobile node for notifying the selected candidate cell-sites (804);
F) selecting, at said mobile node, a new cell-site as said target cell-site from the candidate cell-sites contained in said notification message (805); and
G) transmitting, from said mobile node, an identifier of the new cell-site to said current cell-site.

5. The method of claim 1, wherein the step (b) comprises the steps of:
A) receiving a plurality of cell-site transmitted signals at said mobile node and determining channel quality of the signals (821);
B) transmitting a report message (822) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
C) selecting (823), at said current cell-site, a new cell-site as said target cell-site based on contents of said report message (822); and
D) transmitting a reservation request message from said current cell-site to said target cell-site for reserving said wireless resource.

6. The method of claim 1, wherein the step (b) comprises the steps of:
A) receiving a plurality of cell-site transmitted signals at said mobile node and determining channel quality of the signals (831);
B) transmitting a notification message (832) from the current cell-site to said mobile node for notifying a plurality of candidate cell-sites;
C) selecting, at said mobile node, said target cell-site from the notified candidate cell-sites based on the determined channel quality of each of the candidate cell-sites; and
D) transmitting a reservation request message (835) from said mobile node to said current cell-site for reserving said wireless resource.

7. The method of claim 1, wherein the step (b) comprises the steps of:
A) receiving a plurality of cell-site transmitted signals at said mobile node and determining channel quality of the signals (841);
B) transmitting a report message (842) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
C) making a decision, at said current cell-site, as to whether there is at least one cell-site whose channel quality is higher than channel quality of the current cell-site;
D) repeating steps (A) and (B) if the decision at step (C) is negative and selecting a plurality of candidate cell-sites based on contents of said report message (842) if the decision at step (C) is affirmative;
E) transmitting a notification message (844) from the current cell-site to said mobile node for notifying the selected candidate cell-sites;
F) selecting (845), at said mobile node, a new cell-site as said target cell-site from the notified candidate cell-sites; and
G) transmitting a reservation request message (846) from said mobile node to said current cell-site for reserving said wireless resource.

8. The method of claim 1, wherein the step (b) comprises the steps of:
A) receiving a plurality of cell-site transmitted signals at said mobile node and determining channel quality of the signals (851);
B) transmitting a report message (852) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
C) making a decision, at said current cell-site, as to whether there is at least one cell-site whose channel quality is higher than channel quality of the current cell-site based on contents of the report message (852); and
D) repeating steps (A) and (B) if the decision at step (C) is negative and selecting a new cell-site as said target cell-site and transmitting a stop command message (854) to said mobile node to stop repeating steps (A) and (B) if the decision at step (C) is affirmative.

9. The method of any one of claims 2 to 8, further comprising the steps of:
prior to the step (A), exclusively receiving at said mobile node, a signal from the current cell-site and determining channel quality of the signal (861); and
receiving, at said current cell-site, a signal from the mobile node and determining at least one neighbor cell-site whose signal can be detected by said mobile node and transmitting a command signal (862) from the current cell-site to said mobile node for receiving said plurality of cell-site transmitted signals.

10. The method of any one of claims 2 to 8, wherein said reservation request message contains a list of wireless resources necessary to support a plurality of sessions of said mobile node.

11. The method of claim 4, further comprising transmitting a command message (809) from said current cell-site to one of the neighbor cell-sites of step (C) to release the reserved resource after said IP address is transmitted from the current cell-site to said mobile node.

12. The method of any one of claims 2 to 8, further comprising transmitting resource data from a plurality of neighbor cell-sites to said current cell-site prior to step (A) for indicating available wireless resources of said neighbor cell-sites.

13. The method of claim 4 or 7, further comprising transmitting resource data from a plurality of neighbor cell-sites to said current cell-site following step (B) for indicating available wireless resources of said neighbor cell-sites.

14. The method of claim 1, wherein a resource manager (RM) is connected to said network, and wherein the step (b) comprises the steps of:
A) receiving a plurality of cell-site transmitted signals at said mobile node and determining channel quality of the signals (1401);
B) transmitting a cell-sites report message (1402) from said resource manager to said mobile node for notifying a plurality of neighbor cell-sites whose signals can be detected by said mobile node;
C) making a decision, at said mobile node, as to whether channel quality of at least one of the notified cell-sites is higher than channel quality of the current cell-site;
D) repeating steps (A) and (B) if the decision at step (C) is negative or transmitting a cell-sites report message (1403) from the mobile node to said resource manager if the decision at step (C) is affirmative;
E) selecting, at said resource manager, a plurality of candidate cell-sites from the cell-sites contained in the cell-sites report message from the mobile node and transmitting a notification message (1405) to the mobile node for notifying the candidate cell-sites;
F) selecting, at said mobile node, a new cell-site as said target cell-site from the notified candidate cell-sites (1406); and
G) transmitting a reservation request message (1407) from the mobile node to said current cell-site for reserving said wireless resource.

15. The method of claim 1, wherein a resource manager (RM) is connected to said network, and wherein the step (b) comprises the steps of:
A) receiving a plurality of cell-site transmitted signals at said mobile node and determining channel quality of the signals (1411);
B) transmitting a report message (1412) from said mobile node to said resource manager, said report message including an identifier of said at least one neighbor cell-site, the channel quality of the neighbor cell-site, and wireless resource necessary to support a session of said mobile node;
C) making a decision, at said resource manager, as to whether channel quality of at least one of the notified cell-sites is higher than channel quality of the current cell-site;
D) repeating steps (A) and (B) if the decision at step (C) is negative or selecting, at said resource manager, a plurality of candidate cell-sites from the cell-sites contained in the report message from the mobile node, transmitting a reservation request message (1414) to neighbor cell-sites indicated in said mobile-transmitted report message for reserving said wireless resource and transmitting a notification message (1415) from the resource manager to said mobile node for notifying the selected candidate cell-sites;
E) selecting, at said mobile node, a new cell-site as said target cell-site from the notified candidate cell-sites (1416) and transmitting an identifier of the new cell-site to the resource manager; and
F) transmitting a handover command message (1417) from said resource manager to said current cell-site and the new cell-site.

16. The method of claim 15, wherein the step (F) further comprises transmitting a command message (1419) from said resource manager to one of the neighbor cell-sites of step (D) to release the reserved resource.

17. The method of any one of claims 14 and 15, further comprising the steps of:
prior to the step (A), receiving at said mobile node, a signal from the current cell-site and determining channel quality of the signal (1431); and
receiving, at said resource manager, a signal from the mobile node and determining at least one neighbor cell-site whose signal can be detected by said mobile node and transmitting a command signal (1432) from the resource manager to said mobile node for receiving said plurality of cell-site transmitted signals.

18. The method of claim 1, further comprising the steps of:
initially assigning a first care-of address to said mobile node;
assigning a second care-of address to said mobile node when said mobile node is preparing said handover;
mapping said first care-of address to said second care-of address; and
receiving mobile-destined packets from said network at said current cell-site when said handover is completed and forwarding the received packets to said mobile node via said target cell-site according to the mapped first and second care-of addresses.

19. A communication system comprising:
a current cell-site (AR-1) connected to a communications network (100);
a mobile node (MN) for establishing a unicast packet communication using a network-layer protocol from to a distant node via a first wireless link of said current cell-site; and
a target cell-site (AR-2) connected to said communications network for reserving wireless resource necessary to support the communication when said mobile node is preparing a handover from said current cell-site to said target cell-site, and assigning an IP address and at least one channel identifier to said mobile node,
said mobile node establishing a second wireless link to said target cell-site using said reserved resource and said channel identifier and reestablishing said unicast packet communication using said IP address.

20. The communication system of claim 19,
wherein said mobile node receives at least one cell-site transmitted signal, determines channel quality of the signal, and transmits a report message (802) to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node,
wherein said current cell-site selects a plurality of candidate cell-sites based on contents of said report message (802) and transmits a notification message (804) to said mobile node for notifying the selected candidate cell-sites,
wherein said mobile node selects a new cell-site in response to said notification message, and
wherein said mobile node transmits a reservation request message (806) to said current cell-site for reserving said wireless resource.

21. The communication system of claim 19, wherein said mobile node receives a plurality of cell-site transmitted signals and determines channel quality of the signals (801), transmits a report message (802) to said current cell-site if said target cell-site is only one neighbor cell-site whose channel quality is higher than channel quality of said current cell-site for informing an identifier of said target cell-site, the channel quality of said target cell-site, and wireless resource necessary to support a session of said mobile node (802), and transmits a reservation request message (806) to said current cell-site for reserving said wireless resource of said target cell-site.

22. The communication system of claim 19,
wherein said mobile node receives a plurality of cell-site transmitted signals and determines channel quality of the signals (801), and transmits a report message (802) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
wherein said current cell-site transmits a reservation request message (807, 808) to neighbor cell-sites for reserving said wireless resource and selects a plurality of candidate cell-sites based on contents of said report message (802), transmits a notification message to said mobile node for notifying the selected candidate cell-sites (804),
wherein said mobile node selects a new cell-site as said target cell-site from the candidate cell-sites contained in said notification message (805) and transmits an identifier of the new cell-site to said current cell-site.

23. The communication system of claim 19,
wherein said mobile node receives a plurality of cell-site transmitted signals at said mobile node and determining channel quality of the signals (821) and transmits a report message (822) to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node,
wherein said current cell-site selects a new cell-site as said target cell-site based on contents of said report message (822), and transmits a reservation request message to said target cell-site for reserving said wireless resource.

24. The communication system of claim 19,
wherein said mobile node receives a plurality of cell-site transmitted signals at and determining channel quality of the signals,
wherein said current cell-site transmits a notification message (832) to said mobile node for notifying a plurality of candidate cell-sites;
wherein said mobile node receives selects a new cell-site as said target cell-site from the notified candidate cell-sites based on the determined channel quality of each of the candidate cell-sites, and transmits a reservation request message (835) to said current cell-site for reserving said wireless resource.

25. The communication system of claim 19,
wherein said mobile node receives a plurality of cell-site transmitted signals, determines channel quality of the signals, and transmits a report message (842) from said mobile node to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
wherein said current cell-site makes a decision as to whether there is at least one cell-site whose channel quality is higher than channel quality of the current cell-site based on contents of said report message (842);
wherein said mobile node repeatedly receives said cell-site transmitted signals and repeatedly transmits said report message (842) if the decision of the current cell site is negative,
wherein said current cell-site select a plurality of candidate cell-sites based on contents of said report message (842) if the decision of the current cell-site is affirmative transmits a notification message (844) to said mobile node for notifying the selected candidate cell-sites;
wherein said mobile node selects a new cell-site as said target cell-site from the notified candidate cell-sites, and transmits a reservation request message (846) to said current cell-site for reserving said wireless resource.

26. The communication system of claim 19,
wherein said mobile node receives a plurality of cell-site transmitted signals, determines channel quality of the signals, transmits a report message (852) to said current cell-site if there is at least one neighbor cell-site whose channel quality is higher than channel quality of said current cell-site, said report message including an identifier of said at least one neighbor cell-site, the channel quality of the neighbor cell-site, and wireless resource necessary to support a session of said mobile node;
wherein said current cell-site makes a decision as to whether there is at least one cell-site whose channel quality is higher than channel quality of the current cell-site based on contents of the report message (852), wherein said mobile node repeatedly receives said cell-site transmitted signals and repeatedly transmits said report message (852) if the decision of said current cell-site is negative,
wherein said current cell-site selects a new cell-site as said target cell-site and transmits a stop command message (854) to said mobile node to stop repeatedly receiving the signals and transmitting said report message if the decision at step (C) is affirmative.

27. The communication system of any one of claims 20 to 26,
wherein said mobile node exclusively receives a signal from the current cell-site and determines channel quality of the signal,
wherein said current cell-site receives a signal from the mobile node and determines at least one neighbor cell-site whose signal can be detected by said mobile node and transmitting a command signal (862) to said mobile node for receiving said plurality of cell-site transmitted signals.

28. The communication system of any one of claims 20 to 26,
wherein said reservation request message contains a list of wireless resources necessary to support a plurality of sessions of said mobile node.

29. The communication system of claim 22, wherein said current cell-site transmits a command message (809) to one of the neighbor cell-sites to release the reserved resource after said IP address is transmitted from the current cell-site to said mobile node.

30. The communication system of any one of claims 20 to 26,
wherein a plurality of neighbor cell-sites transmit resource data to said current cell-site for indicating available wireless resources of said neighbor cell-sites.

31. The communication system of claim 19, further comprising a resource manager (RM) connected to said network,
wherein said mobile node receives a plurality of cell-site transmitted signals and determines channel quality of the signals;
wherein said resource manager transmits a cell-sites report message (1402) to said mobile node for notifying a plurality of neighbor cell-sites whose signals can be detected by said mobile node,
wherein said mobile node makes a decision as to whether channel quality of at least one of the notified cell-sites is higher than channel quality of the current cell-site based on contents of said cell-sites report message from the resource manager, and repeatedly receives said cell-site transmitted signals if said decision is negative and transmits a cell-sites report message (1403) to said resource manager if said decision is affirmative;
wherein said resource manager selects a plurality of candidate cell-sites from the cell-sites contained in the cell-sites report message (1403) from the mobile node and transmits a notification message (1405) to the mobile node for notifying the candidate cell-sites;
wherein said mobile node selects a new cell-site as said target cell-site from the notified candidate cell-sites (1406), and transmits a reservation request message (1407) to said current cell-site for reserving said wireless resource.

32. The communication system of claim 19, further comprising a resource manager (RM) connected to said network,
wherein said mobile node receives a plurality of cell-site transmitted signals and determines channel quality of the signals and transmits a report message (1412) to said resource manager for informing an identifier of said at least one neighbor cell-site, the channel quality of the neighbor cell-site, and wireless resource necessary to support a session of said mobile node,
wherein said resource manager makes a decision as to whether channel quality of at least one of the notified cell-sites is higher than channel quality of the current cell-site;
wherein said mobile node repeatedly receive said cell-site transmitted signals and repeatedly transmits said report message (1412) if the decision of the resource manager is negative,
wherein, if the decision of the resource manager is negative, said resource manager selects a plurality of candidate cell-sites from the cell-sites contained in the report message from the mobile node and transmits a reservation request message (1414) to neighbor cell-sites indicated in said mobile-transmitted report message (1412) for reserving said wireless resource and transmits a notification message (1415) to said mobile node for notifying the selected candidate cell-sites,
wherein said mobile node selects a new cell-site as said target cell-site from the notified candidate cell-sites (1416) and transmits an identifier of the new cell-site to the resource manager,
wherein said resource manager is responsive to said identifier for transmitting a handover command message (1417) to said current cell-site and the new cell-site.

33. The communication system of claim 32, wherein said resource manager transmits a command message (1419) to one of the neighbor cell-sites to release the reserved resource.

34. The communication system of any one of claims 31 and 32,
wherein said mobile node initially receives a signal from the current cell-site and determines channel quality of the signal, and
wherein said resource manager receives a signal from the mobile node and determines at least one neighbor cell-site whose signal can be detected by said mobile node and transmits a command signal (1432) to said mobile node for receiving said plurality of cell-site transmitted signals.

35. The communication system of claim 19,
wherein said current cell-site includes a mapping table (307) for mapping a first care-of address initially assigned to said mobile node to a second care-of address subsequently assigned to the mobile node; and
wherein said current cell-site receives mobile-destined packets from said network when said handover is completed and forwards the received packets to said mobile node via said target cell-site according to the mapped first and second care-of addresses.
